# EUROPÄISCHE PATENTSCHRIFT

(11) **EP 1 758 783 B1**
(45) Veröffentlichungstag und Bekanntmachung des Hinweises auf die Patenterteilung: **16.04.2008**
(21) Anmeldenummer: 05740083.0
(22) Anmeldetag: 06.05.2005
(51) Int. Cl.: B62D 15/00, G06K 9/20

(54) **ÜBERWACHUNGSEINHEIT NEBST ASSISTENZSYSTEM FÜR KRAFTFAHRZEUGE**
MONITORING UNIT IN ADDITION TO AN ASSIST SYSTEM FOR MOTOR VEHICLES
UNITE DE SURVEILLANCE ASSOCIEE A UN SYSTEME D'ASSISTANCE POUR UN VEHICULE

(30) Priorität: 25.05.2004 DE 102004025541; 01.06.2004 DE 102004026591
(43) Veröffentlichungstag der Anmeldung: 07.03.2007
(73) Patentinhaber: VDO Automotive AG, 93055 Regensburg (DE)
(72) Erfinder: FRENZEL, Henryk, 93059 Regensburg (DE); KOEHLER, Thorsten, 88131 Lindau (DE); VOLTZ, Stephan, 91230 Happurg (DE); WAGNER, Ulrich, 88079 Kressbronn am Bodensee (DE)
(86) Internationale Anmeldenummer: PCT/EP2005/052080
(87) Internationale Veröffentlichungsnummer: WO 2005/115820

(56) Entgegenhaltungen:
- PATENT ABSTRACTS OF JAPAN Bd. 1997, Nr. 06, 30. Juni 1997 (1997-06-30) & JP 09 035065 A (MITSUBISHI ELECTRIC CORP), 7. Februar 1997 (1997-02-07)
- PATENT ABSTRACTS OF JAPAN Bd. 2003, Nr. 12, 5. Dezember 2003 (2003-12-05) & JP 2004 040409 A (FUJI HEAVY IND LTD), 5. Februar 2004 (2004-02-05)
- PATENT ABSTRACTS OF JAPAN Bd. 2000, Nr. 03, 30. März 2000 (2000-03-30) & JP 11 351862 A (YAZAKI CORP), 24. Dezember 1999 (1999-12-24)
- PATENT ABSTRACTS OF JAPAN Bd. 2003, Nr. 12, 5. Dezember 2003 (2003-12-05) & JP 2004 104646 A (HITACHI LTD), 2. April 2004 (2004-04-02)

## Beschreibung

Die vorliegende Erfindung betrifft eine Überwachungseinheit für den Außenraum in Fahrtrichtung eines Kraftfahrzeuges wenigstens umfassend ein Kamerasystem mit einem Bildaufnahmesensor, wie sie aus der JP 09035065 bekannt ist.

Darüber hinaus betrifft die vorliegende Erfindung ein Assistenzsystem für Kraftfahrzeuge, insbesondere zur Verkehrszeichen- und/oder Spurerfassung, mit zumindest einer den Außenraum in Fahrtrichtung des Kraftfahrzeuges erfassenden Überwachungseinheit, wobei die Überwachungseinheit wenigstens ein Kamerasystem mit einem Bildaufnahmesensor umfasst.

Intelligente ADAS- (Advanced Driver Assistance Systems) Fahrerassistenzsysteme werden in modernen Kraftfahrzeugen der Zukunft eine immer wichtigere Stellung einnehmen. Zukünftige Kraftfahrzeuge werden beispielsweise Überwachungseinheiten wie Kamerasysteme mit z.B. digitalen CMOS- (Complementary Metal Oxide Semiconductor) oder CCD- (Charge Coupled Device) Bildsensoren als Hilfsmittel enthalten, welche den Außenraum, beispielsweise in Fahrtrichtung des Kraftfahrzeuges, erfassen.

Bei derartigen bildverarbeitenden Systemen im Automobilbereich zur Fahrumgebungserfassung ist für die meisten Aufgaben eine reine schwarz/weiß (S/W), also eine monochrome Bildaufnahme günstiger als eine farbige. Es gibt jedoch Anwendungen, wo eine Farbinformation z.B. gewonnen aus den drei RGB-Grundfarben rot (R), grün (G) blau (B) und/oder andere Farben wie z.B. gelb (Y) etc. wichtig sein kann, um eine höhere Aussagewahrscheinlichkeit ("confidence level") des von einer Bildverarbeitung generierten Ausgangsvektors zu erreichen.

Ein Beispiel ist die Erkennung von Verkehrsschildern, wobei über die ggf. einzelne Farbinformation (R und/oder G und/oder B und/oder andere Farben wie z.B. Y etc.) erkannt werden kann, ob es sich um ein Ver- bzw. Gebotsschild handelt oder um ein reines Informationsschild.

Eine weitere Funktion ist die Erkennung von farbigen Fahrspurmarkierungen, beispielsweise im Baustellenbereich. Hier ist ebenfalls eine Farbinformation hilfreich und notwendig, beispielsweise um zwischen den normalen weißen, nicht mehr gültigen Markierungen, und den zusätzlichen gelben Fahrspurmarkierungen unterscheiden zu können.

Demgegenüber ist für eine Erkennung von Objekten wie Hindernissen, anderen Fahrzeugen, Zweiradfahrern oder Personen, eine rein monochrome (S/W) Bildaufnahme ausreichend, da eine Farbinformation (R, G, B, Y etc.) hierbei in der Regel keine höhere Erkennungsqualität bietet.

Der Erfindung liegt die Aufgabe zugrunde, eine verbesserte Überwachungseinheit für den Außenraum in Fahrtrichtung eines Kraftfahrzeuges wenigstens umfassend eine Kamerasystem mit einem Bildaufnahmesensor sowie eine verbessertes Assistenzsystem für Kraftfahrzeuge, insbesondere zur Verkehrszeichen- und/oder Spurerfassung, bereitzustellen.

Diese Aufgabe wird durch die Merkmale der unabhängigen Patentansprüche gelöst.

Vorteilhafte Aus- und Weiterbildungen, welche einzeln oder in Kombination miteinander eingesetzt werden können, sind Gegenstand der abhängigen Ansprüche.

Die Erfindung baut auf gattungsgemäße Überwachungseinheiten für den Außenraum in Fahrtrichtung eines Kraftfahrzeuges dadurch auf, dass die Überwachungseinheit wenigstens ein Kamerasystem mit einem Bildaufnahmesensor umfasst, welcher in partiellen Bereichen Farbcodierungen (R, G, B, Y ...) besitzt und ansonsten monochrome Codierungen (S/W) aufweist. Die vorliegende Erfindung geht somit von einem im Wesentlichen monochrom (S/W) ausgebildeten bzw. codierten Bildaufnahmesensor aus, welcher erfindungsgemäß in partiellen Bereichen Farbcodierungen (R und/oder G und/oder B und/oder andere Farben wie z.B. Y etc.) besitzt.

Zwecks Erkennung bzw. Zuordnung konkreter Farben von Verkehrszeichen wird vorgeschlagen, im rechten und/oder linken Bildrand eine Farbcodierung (R und/oder G und/oder B und/oder andere Farben wie z.B. Y etc.) von vertikalen Streifen und/oder Bereichen vorzusehen. Da Verkehrschilder bei einer Montage der Kamera im Frontbereich des Kraftfahrzeugs bei Geradeausfahrt aus Sicht der Kamera von der Mitte des Bildes nach außen wandern, kann zu dem Zeitpunkt, wenn sich das Schild innerhalb der farbcodierten Streifen bzw. Bereiche befindet in vorteilhafter Weise die Farbe des Schildes und die damit verbundene Grundaussage (Verbot, Gebot, sonstige Information) ermittelt werden.

Zwecks Erkennung der z.B. gelben oder weißen Farbe einer Fahrspurmarkierung wird vorgeschlagen, im unteren Bildrand des Sensors eine Farbcodierung (R und/oder G und/oder B und/oder andere Farben wie z.B. Y etc.) von horizontalen Streifen und/oder Bereichen vorzusehen, vorzugsweise in dem Bereich, wo insb. bei einem gewöhnlichen Personenkraftwagens (Pkw) die Kamera den Blick gerade über die Kühlerhaube auf die Strasse hat. Freilich ist beim Einsatz der erfindungsgemäßen Überwachungseinheit in einem Lastkraftwagen (Lkw) oder einem Kleintransporter etc. eine analoge Anordnung der Kamera möglich. Dieser Bereich ist für eine Bildauswertung bezüglich Objektdetektion oder Spurerfassung nicht zwingend erforderlich, und kann somit vorteilhaft dem Zweck der Farberkennung dienen. Da Fahrspuren bei einer Frontmontage der Kamera und Geradeausfahrt von der mittleren/oberen Bildmitte bis zum unteren linken bzw. rechten Bildbereich zu sehen sind, kann zusätzlich zur Position der Fahrspur vorteilhaft die Farbe ermittelt und einem bildverarbeitenden System zur Verfügung gestellt werden.

Um die gewünschten Farbinformationen (R und/oder G und/oder B und/oder andere Farben wie z.B. Y etc.) zu erhalten wird vorgeschlagen, vor jeder einzelnen Zelle (Pixel) der interessierenden Streifen bzw. Bereiche einen winzigen, ggf. an die Anwendung speziell angepassten, Farbfilter aufzubringen.

In einer ersten Ausgestaltung sind die farbcodierten Streifen und/oder Bereiche beispielsweise in einer einzelnen Farbe (R; Y; etc....) ausgeführt. Zweckmäßigerweise weisen die vertikalen Streifen und/oder Bereiche beispielsweise eine rote (R) Farbcodierung; die horizontalen Streifen und/oder Bereiche vorzugsweise eine gelbe (Y) Farbcodierung auf.

Alternativ oder kumulativ hierzu können die farbcodierten horizontalen und vertikalen Streifen und/oder Bereiche in einer Kombination von zwei Farben (R, G) ausgeführt sein. Insbesondere haben sich vertikale Streifen und/oder Bereiche mit einer roten (R) und grünen (G) Farbcodierung zwecks Erhöhung des Kontrastes von Gebotsschildern vor Bäumen bewährt.

In einer weiteren Ausgestaltung wird zum Erhalt der gewünschten Farbinformationen (R, G, B) vorgeschlagen, vor jeder einzelnen Zelle (Pixel) der interessierenden Streifen bzw. Bereiche einen winzigen Farbfilter in einer der drei RGB-Grundfarben rot (R), grün (G) und blau (B) aufzubringen, welche vorzugsweise im sog. Bayer-Muster angeordnet sind.

Die Erfindung besteht weiterhin in einem Assistenzsystem mit einer Überwachungseinheit der vorstehend genannten Art. Auf diese Weise kommen die Vorteile der Überwachungseinheit auch im Rahmen eines Gesamtsystems, insb. zur Verkehrszeichen- und/oder Spurerfassung, zur Geltung. Dabei beträgt das Verhältnis monochromer Codierungen (S/w) zu partiellen Farbcodierungen beträgt vorzugsweise 80 : 20 %. Je nach Anwendungsschwerpunkt können die partiell farbcodierten Bereiche auch 25 % oder bis zu 40 % der Sensorfläche ausmachen.

Der wesentliche Vorteil einer erfindungsgemäßen Überwachungseinheit für den Außenraum in Fahrtrichtung eines Kraftfahrzeuges bzw. eines Assistenzsystems für Kraftfahrzeuge umfassend eine derartige Überwachungseinheit mit einer partiell farbcodierten (R und/oder G und/oder B und/oder andere Farben wie z.B. Y etc.) Kamera ist, dass erstmals mit nur einer Kamera alle relevanten Daten zur Fahrumgebungserfassung gewonnen werden können. Durch den im wesentlichen monochromen (S/W) Bildaufnehmer der Kamera, ist die Empfindlichkeit nicht eingeschränkt, um auch bei schlechten Lichtverhältnissen eine sichere Auswertung zu gewährleisten; die Farbcodierung (R und/oder G und/oder B und/oder andere Farben wie z.B. Y etc.) im Randbereich des Sensors stört nicht diejenigen Applikationen, für welche das rein monochrome (S/W) Bild günstiger ist.

Dagegen bietet die Farbcodierung (R und/oder G und/oder B und/oder andere Farben wie z.B. Y etc.) mit vertikalen Streifen und/oder Bereichen im rechten und/oder linken Bildfeldrand des Sensors eine sichere Information über die Farbe (R, G, B, Y, ...) von Verkehrsschildern; die Farbcodierung (R, G, B, Y, ...) im unteren Bildbereich eine sichere Information über die Farbe von Fahrspurmarkierungen.

Somit kann für alle einschlägigen Anwendungen eine einzige Kamera eingesetzt werden, was in vorteilhafter Weise Kosten und Bauraum spart.

Die Erfindung wird nachfolgend mit Bezug auf die begleitende Zeichnung anhand eines bevorzugten Ausführungsbeispiels beschrieben.

Darin zeigen schematisch:
- Fig. 1: das Beispielbild einer monochrom (S/W) abgebildeten Außenraumszene eines Kraftfahrzeuges;
- Fig. 2: die Prinzipskizze einer möglichen Farbfilterverteilung (R, G, B) des Bildaufnehmers der Kamera einer Überwachungseinheit;
- Fig. 3: einen vergrößerten Ausschnitt der Farbfilterverteilung nach Fig. 2;
- Fig. 4: das Beispielbild nach Fig. 1 mit einer nach Fig. 2 teilfarbcodierten Außenraumszene; und
- Fig. 5 und 6: weitere Beispiele einer Farbfilterverteilung des Bildaufnehmers einer Überwachungseinheit.

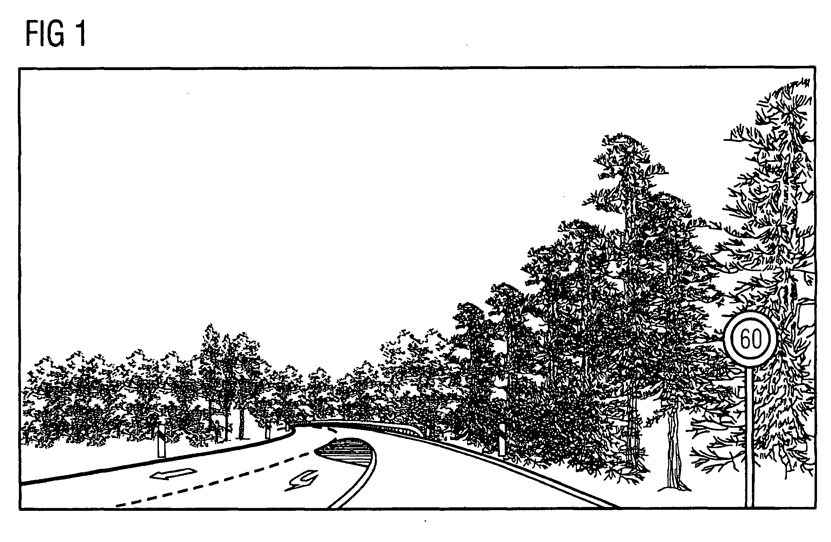

Fig. 1 zeigt das Beispielbild einer monochrom abgebildeten Außenraumszene eines Kraftfahrzeuges. Nachteilig an einer derartigen schwarz/weiß (S/W) Bildaufnahme ist die fehlende Farbinformation, welche beispielsweise sich aus den drei Primärfarben rot (R) und/oder grün (G) und/oder blau (B) und/oder andere Farben wie z.B. Y etc. gewinnen ließe.

Derartige Farbinformationen (R, G, B, Y, ...) können zur Erreichung einer höheren Aussagewahrscheinlichkeit ("confidence level") des von einer Bildverarbeitung generierten Ausgangsvektors wichtig sein, insbesondere für die Erkennung von Verkehrsschildern, wo über die Farbinformation (R und/oder G und/oder B und/oder andere Farben wie z.B. Y etc.) erkannt werden kann, ob es sich um ein Ver- oder Gebotsschild handelt - wie bei dem Geschwindigkeitsbegrenzungszeichen rechts im Bildausschnitt von Fig. 1 - oder um ein reines Informationsschild (nicht dargestellt).

Eine weitere Funktion ist die Erkennung von farbigen Fahrspurmarkierungen im Baustellenbereich. Hier ist eine Unterscheidung hilfreich und notwendig zwischen den normalen weißen, nicht mehr gültigen Markierungen und den zusätzlichen gelben Fahrspuren.

Denkbare Lösungen eines ausschließlich farbcodierten (R, G, B, Y, ...) Bildaufnehmer sind nicht nur rechenzeit- und damit kostenintensiver sondern weisen zudem den Nachteil auf, dass für eine Reihe von Außenraum-Anwendungen, insbesondere für Objektdetektion von Hindernissen, anderen Fahrzeugen, Zweiradfahrern, Personen und dergleichen oder Anwendungen bei Nacht monochrome (S/W) Bilder günstiger sind.

Zur Lösung dieser sich entgegenstehenden Anforderungen schlägt die vorliegende Erfindung in einer gattungsgemäßen Überwachungseinheit die Verwendung eines z.B. speziell ausgebildeten CCD-Sensors 10 vor, welcher in partiellen Bereichen 11, 12, 13 Farbcodierungen (R, G, B, Y ...) besitzt und ansonsten monochrome Codierungen (S/W) aufweist. Mit anderen Worten geht die vorliegende Erfindung von einem im wesentlichen monochrom (S/W) ausgebildeten bzw. codierten Sensor 10 aus, welcher in partiellen Bereichen Farbcodierungen (R und/oder G und/oder B und/oder andere Farben wie z.B. Y etc.) besitzt. Dies könnte beispielsweise durch eine Farbcodierung (R, G, B, Y, ...) von vertikalen Streifen (nicht dargestellt) oder Bereichen im rechten 11 und linken 12 Bildrand geschehen, und wäre hilfreich z.B. Verkehrsschildern die richtige Farbe (R, G, B, Y, ...) zuzuordnen. Da die Verkehrschilder bei einer Montage der Kamera im Frontbereich des Fahrzeugs bei Geradeausfahrt aus Sicht der Kamera von der Mitte des Bildes nach außen wandern, kann zu dem Zeitpunkt wenn sich das Schild innerhalb der farbcodierten (R, G, B, Y, ...) Streifen bzw. Bereiche 11, 12 befindet die Farbe (R, G, B, Y, ...) des Schildes ermittelt werden.

Für eine Erkennung der Farbe der Fahrspur (z.B. gelb oder weiß) bietet es sich an, im unteren Bereich 13 des Sensors 10 ebenfalls eine, insbesondere gelbe (Y), Farbcodierung vorzusehen, und zwar vorzugsweise in dem Bereich, wo bei einem gewöhnlichen Pkw die Kamera den Blick gerade über die Kühlerhaube auf die Strasse hat. Dieser Bereich ist für eine Bildauswertung bezüglich Objektdetektion oder Spurerfassung nicht zwingend erforderlich, und kann somit für den Zweck der Farberkennung (Y) verwendet werden. Da Fahrspuren bei einer Frontmontage der Kamera und Geradeausfahrt von der mittleren/oberen Bildmitte bis zum unteren linken und rechten Bildbereich zu sehen sind, kann zusätzlich zur Position der Fahrspur immer noch die Farbe ermittelt und dem bildverarbeitenden System zur Verfügung gestellt werden. Freilich ist dieses Merkmal nicht auf Kraftfahrzeuge mit Kühlerhauben beschränkt, sondern kann bei Einsatz der erfindungsgemäßen Überwachungseinheit insb. in einem Lkw oder einem Kleintransporter etc. analoge verwirklicht werden.

Gerade auch bei einer Anwendung für Nachtsicht ist die höchstmögliche Empfindlichkeit über den gesamten, also ungefilterten, Wellenlängenbereich, inklusive dem nahen Infrarot notwendig. Hier muss aber im Allgemeinen auch ein wesentlich kleinerer Erfassungswinkel detektiert werden, so dass es genügt einen kleineren mittleren Bereich ohne Farbcodierung zu versehen.

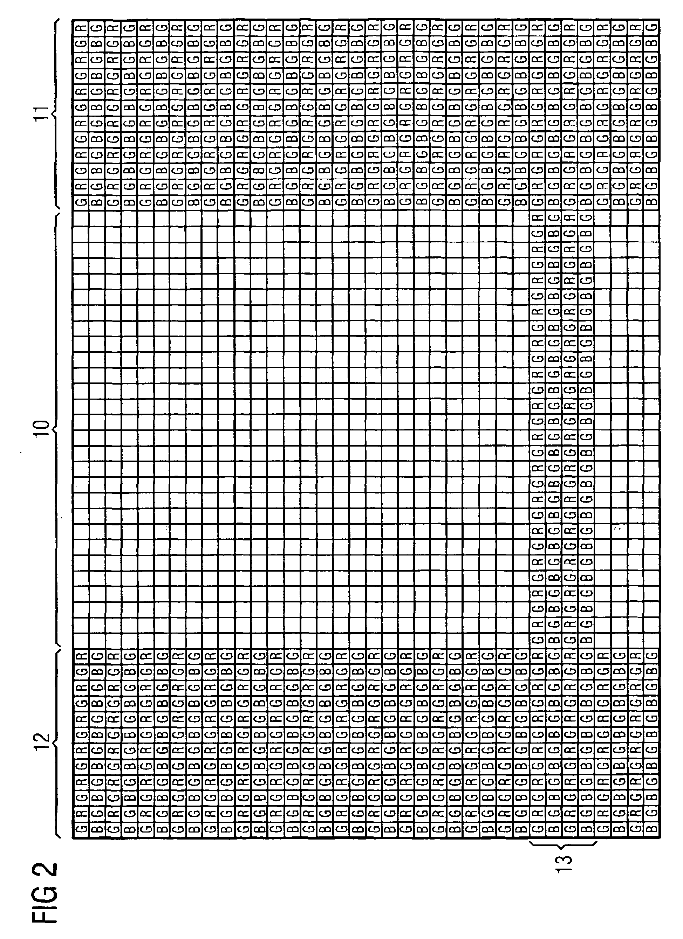

Fig. 2 zeigt die Prinzipskizze einer möglichen Farbfilterverteilung (R, G, B) des Bildaufnehmers 10 der Kamera einer Überwachungseinheit. Normalerweise erfassen die lichtempfindlichen Zellen eines farblich uncodierten (N) CCD-Sensors 10 in der Digitalkamera der Überwachungseinheit nur Helligkeitswerte. Um Farbinformationen (R, G, B, Y, ...) zu erhalten, ist vor jeder einzelnen Zelle ein winziger Farbfilter z.B. in einer der drei RGB-Grundfarben rot (R), grün (G) und/oder blau (B) und/oder einer anderen Farbe wie z.B. gelb (Y) etc. aufzubringen. Aus Grundfarben aufgebaute Filter sind normalerweise in der Anordnung R-G-R-G und in der nächsten Zeile G-B-G-B angebracht, die in dieser Anordnung das so genannte "Bayer Pattern" (deutsch: Bayer Muster) ergeben.

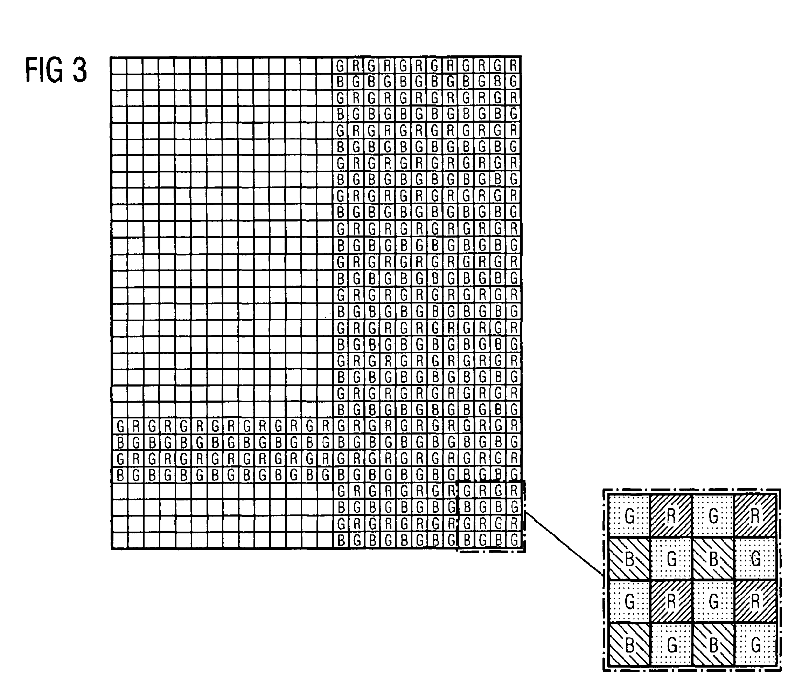

Fig. 3 zeigt einen vergrößerten Ausschnitt einer als Bayer-Muster angeordneten Farbfilterverteilung (R, G, B) nach Fig. 2. Deutlich erkennbar ist, wie jedes CCD-Element nur die Information für einen einzigen Farbanteil liefert, so dass dementsprechend die benachbarten Pixel für die Errechnung der tatsächlichen Farbe herangezogen werden müssen. Dieser Prozess trägt die Bezeichnung "Farbinterpolation".

Mittels derartiger Farbinterpolationen lassen sich innerhalb der als Bayer-Pattern codierten Streifen bzw. Bereichen 11, 12, 13 des Sensors 10 im Straßenverkehr aussagebehaftete Farbinformationen gewinnen und einem bildverarbeitenden System zur Verfügung stellen:

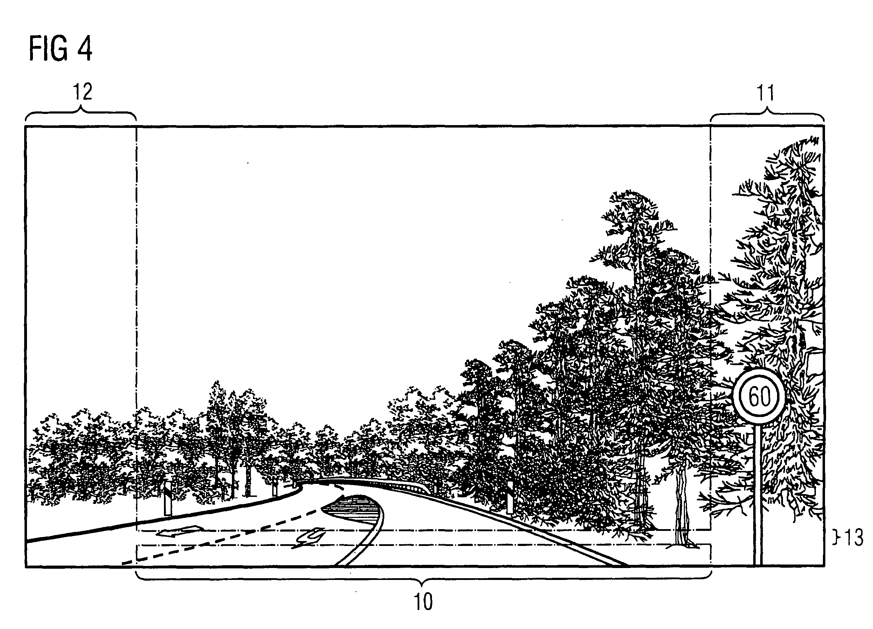

Das dementsprechende Beispielbild nach Fig. 1 mit einer nach Fig. 2 teilfarbcodierten Außenraumszene zeigt Fig. 4.

Die Farbinformation muss nicht zwingend aus den drei Grundfarben bestehen. Es können auch nur einzelne Farbfilter verwendet werden wie z.B. rote (R) für Gebotsschilder oder gelbe (Y) für Fahrspurmarkierungen z.B. im Baustellenbereich. Auch haben sich zur Erhöhung des Kontrastes von Gebotsschildern vor Bäumen Kombinationen aus roten (R) und grünen (G) Farbfiltern oder anderen speziell der Anwendung angepasste Farbfilter bewährt. Derartige Farbfilter können vorteilhaft auch mit einem Abstand zueinander angeordnet sein, beispielsweise auf jedem zweiten Pixel einer Zeile und/oder Spalte; also in beliebiger Kombination mit uncodierten (N) Pixel oder andersfarbig codierten Pixel bzw., ggf. speziell angepasster, Farbfilter.

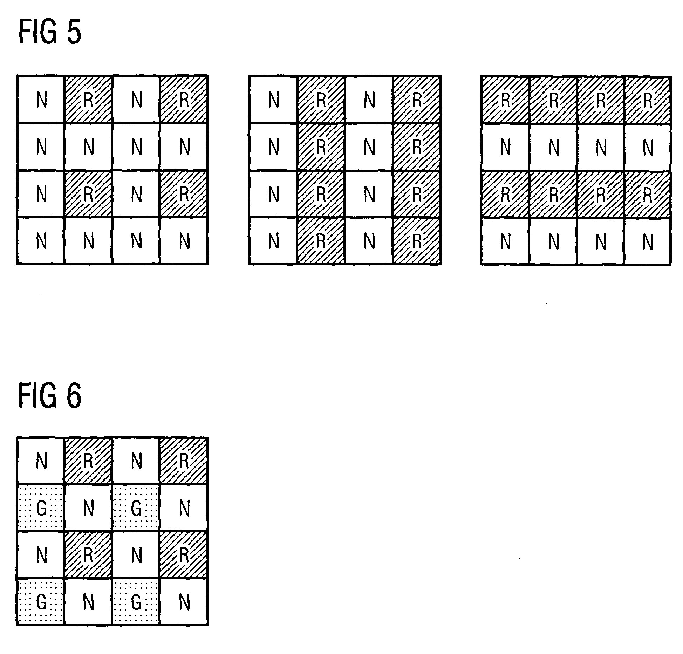

Derartig vorteilhafte Anordnungen bzw. weitere Beispiele von Farbcodierungen, die an Stelle des "Bayer-Pattern" verwendet werden können, zeigen Fig. 5 und 6:

Fig. 5 zeigt deutlich, wie z.B. zur Erkennung von Gebotsschildern nur jedes zweite Pixel in einer Zeile und/oder zweiten Spalte mit roten Farbfiltern (R) versehen ist.

Fig. 6 zeigt die vorteilhafte Ausführung einer Kombination von zwei Farben. Statt R-G-R-G und in der nächsten Zeile G-B-G-B wie beim "Bayer-Musrer" werden Farbfilter im Muster R-N-R-N und in der nächsten Zeile N-G-N-G verwendet, wobei N keine Farbcodierung bedeutet.

Der wesentliche Vorteil einer partiell farbcodierten Kamera ist, dass mit nur einer Kamera alle relevanten Daten zu Fahrumgebungserfassung gewonnen werden können. Durch die im wesentlichen monochrome (S/W) Kamera, ist die Empfindlichkeit nicht eingeschränkt, um auch bei schlechten Lichtverhältnissen eine sichere Auswertung zu gewährleisten; die Farbcodierung (R, G, B, Y, ...) in definierten Randbereichen 11, 12, 13 des Sensors 10 stören nicht für die Applikationen, für welche das rein monochrome (S/W) Bild günstiger ist. Dagegen bietet die Farbcodierung (R, G, B, Y, ...) mit vertikalen Streifen im linken 11 und rechten 12 Bildfeldrand eine sichere Information über die Farbe (R, G, B, Y, ...) von Verkehrsschildern, die Farbcodierung (R, G, B, Y ...) im unteren Bildbereich 13 eine sichere Information über die Farbe von Fahrspuren.

Somit kann für alle Anwendungen eine einzige Kamera eingesetzt werden, was Kosten und Bauraum spart.

Die vorliegende Erfindung eignet sich daher insbesondere für die Implementierung in einem Assistenzsystem für Kraftfahrzeuge, insb. zur Verkehrszeichen- und/oder Spurerfassung. Nicht nur in Kombination mit bestehenden Assistenzsystemen für Kraftfahrzeuge wie Blind-Spot-Detektion, LDW (Lane Departure Warning) - Spurüberwachung, Night Vision etc. erhöht sie vorteilhaft die Sicherheit im Straßenverkehr.

## Patentansprüche

1. Überwachungseinheit für den Außenraum in Fahrtrichtung eines Kraftfahrzeuges wenigstens umfassend ein Kamerasystem mit einem Bildaufnahmesensor (10), welcher in partiellen Bereichen (11, 12, 13) Farbcodierungen (R, G, B, Y ...) besitzt und ansonsten monochrome Codierungen (S/W) aufweist.

2. Überwachungseinheit nach Anspruch 1, bei der eine Farbcodierung (R, G, B, Y ...) von vertikalen Streifen und/oder Bereichen (11) im rechten Bildrand des Sensors (10) vorgesehen sind.

3. Überwachungseinheit nach Anspruch 1 oder 2, bei der eine Farbcodierung (R, G, B, Y ...) von vertikalen Streifen und/oder Bereichen (12) im linken Bildrand des Sensors (10) vorgesehen sind.

4. Überwachungseinheit nach einem der Ansprüche 1 bis 3, bei der eine Farbcodierung (R, G, B, Y ...) von horizontalen Streifen und/oder Bereichen (13) im unteren Bildrand des Sensors (10) vorgesehen sind.

5. Überwachungseinheit nach Anspruch 4, bei der die Farbcodierung (R, G, B, Y ...) im unteren Bildrand des Sensors (10) sich mit dem Bereich deckt, in dem die Kamera den Blick gerade über die Kühlerhaube eines gewöhnlichen Personenkraftwagens auf die Strasse hat.

6. Überwachungseinheit nach einem der vorherigen Ansprüche, bei der die farbcodierten Streifen und/oder Bereiche (11, 12, 13) in einer einzelnen Farbe (R; Y; ...) ausgeführt sind.

7. Überwachungseinheit nach Anspruch 6, bei der die vertikalen Streifen und/oder Bereiche (11, 12) eine rote (R) Farbcodierung aufweisen.

8. Überwachungseinheit nach Anspruch 6 oder 7, bei der die horizontalen Streifen und/oder Bereiche (13) eine gelbe (Y) Farbcodierung aufweisen.

9. Überwachungseinheit nach einem der vorherigen Ansprüche, bei der die farbcodierten Streifen und/oder Bereiche (11, 12, 13) in einer Kombination von zwei Farben (R, G) ausgeführt sind.

10. Überwachungseinheit nach Anspruch 8 oder 9, bei der die vertikalen Streifen und/oder Bereiche (11, 12) eine rote (R) und grüne (G) Farbcodierung aufweisen.

11. Überwachungseinheit nach einem der vorherigen Ansprüche, bei der die farbcodierten Streifen und/oder Bereiche (11, 12, 13) als Bayer-Muster (R, G, B) ausgebildet sind.

12. Überwachungseinheit nach einem der vorherigen Ansprüche, bei der das Verhältnis monochromer Codierungen (S/W) zu partiellen Farbcodierungen 60 : 40 %; vorzugsweise 75 : 25 %, insbesondere 80 : 20 % beträgt.

13. Assistenzsystem für Kraftfahrzeuge, insbesondere zur Verkehrszeichen- und/oder Spurerfassung, mit zumindest einer den Außenraum in Fahrtrichtung des Kraftfahrzeuges erfassenden Überwachungseinheit nach einem der vorherigen Ansprüche.

## Claims

1. Monitoring unit for the outside in a motor vehicle's direction of travel, which unit includes at least one camera system having an image-recording sensor (10) having color coding (R, G, B, Y, ...) in partial areas (11, 12, 13) but otherwise monochrome coding (B/W).

2. Monitoring unit according to claim 1 wherein colour coding (R, G, B, Y, ...) of vertical stripes and/or areas (11) on the right-hand image edge of the sensor (10) is provided.

3. Monitoring unit according to claim 1 or 2 wherein colour coding (R, G, B, Y, ...) of vertical stripes and/or areas (12) on the left-hand image edge of the sensor (10) is provided.

4. Monitoring unit according to one of claims 1 to 3 wherein colour coding (R, G, B, Y, ...) of horizontal stripes and/or areas (13) on the bottom image edge of the sensor (10) is provided.

5. Monitoring unit according to claim 4 wherein the colour coding (R, G, B, Y, ...) on the bottom image edge of the sensor (10) coincides with the area in which the camera has a view onto the road directly over a customary automobile's hood.

6. Monitoring unit according to one of the preceding claims wherein the colour-coded stripes and/or areas (11, 12, 13) are embodied as a single colour (R; Y; ...).

7. Monitoring unit according to claim 6 wherein the vertical stripes and/or areas (11, 12) have red (R) colour coding.

8. Monitoring unit according to claim 6 or 7 wherein the horizontal stripes and/or areas (13) have yellow (Y) colour coding.

9. Monitoring unit according to one of the preceding claims wherein the colour-coded stripes and/or areas (11, 12, 13) are embodied as a combination of two colours (R, G).

10. Monitoring unit according to claim 8 or 9 wherein the vertical stripes and/or areas (11, 12) have red (R) and green (G) colour coding.

11. Monitoring unit according to one of the preceding claims wherein the colour-coded stripes and/or areas (11, 12, 13) are embodied as the Bayer pattern (R, G, B).

12. Monitoring unit according to one of the preceding claims wherein the ratio of monochrome coding (B/W) to partial colour coding is 60:40%; preferably 75:25%, in particular 80:20%.

13. Assistance system for motor vehicles, in particular for traffic-sign and/or traffic-lane registering, having at least one monitoring unit according to one of the preceding claims that registers the outside in the motor vehicle's direction of travel.

## Revendications

1. Unité de surveillance de l'espace extérieur dans la direction de déplacement d'un véhicule automobile comprenant au moins un système de caméra avec un capteur de prise de vues (10) qui possède des codes de couleurs (R, G, B, Y,...) dans des zones partielles (11, 12, 13) et présente pour le reste des codes monochromes (N/B).

2. Unité de surveillance selon la revendication 1, dans laquelle un code de couleurs (R, G, B, Y,...) sous forme de bandes et/ou de zones verticales (11) est prévu dans le bord droit de l'image du capteur (10).

3. Unité de surveillance selon la revendication 1 ou 2, dans laquelle un code de couleurs (R, G, B, Y,...) sous forme de bandes et/ou de zones verticales (12) est prévu dans le bord gauche de l'image du capteur (10).

4. Unité de surveillance selon l'une des revendications 1 à 3, dans laquelle un code de couleurs (R, G, B, Y,...) sous forme de bandes et/ou de zones horizontales (13) est prévu dans le bord inférieur de l'image du capteur (10).

5. Unité de surveillance selon la revendication 4, dans laquelle le code de couleurs (R, G, B, Y,...) dans le bord inférieur de l'image du capteur (10) recouvre la zone dans laquelle la caméra a une vue directe sur la route via le capot du radiateur d'une voiture particulière traditionnelle.

6. Unité de surveillance selon l'une des revendications précédentes, dans laquelle les bandes et/ou les zones (11, 12, 13) présentant un code de couleurs sont configurées dans une seule couleur (R ; Y ; ...).

7. Unité de surveillance selon la revendication 6, dans laquelle les bandes et/ou les zones verticales (11, 12) présentent un code de couleurs rouge (R).

8. Unité de surveillance selon la revendication 6 ou 7, dans laquelle les bandes et/ou les zones horizontales (13) présentent un code de couleurs jaune (Y).

9. Unité de surveillance selon l'une des revendications précédentes, dans laquelle les bandes et/ou les zones (11, 12, 13) présentant un code de couleurs sont configurées dans une combinaison de deux couleurs (R, G).

10. Unité de surveillance selon la revendication 8 ou 9, dans laquelle les bandes verticales et/ou les zones (11, 12) présentent un code de couleurs rouge (R) et vert (G).

11. Unité de surveillance selon l'une des revendications précédentes, dans laquelle les bandes et/ou les zones (11, 12, 13) présentant un code de couleurs sont configurées sous forme de matrice de Bayer (R, G, B).

12. Unité de surveillance selon l'une des revendications précédentes, dans laquelle le rapport entre les codes monochromes (N/B) et les codes de couleurs partiels est égal à 60 : 40 % ; de préférence à 75 : 25 %, en particulier à 80 : 20 %.

13. Système d'assistance pour véhicules automobiles, en particulier pour l'enregistrement des panneaux de signalisation et/ou des voies de circulation, comprenant au moins une unité de surveillance enregistrant l'espace extérieur dans la direction de déplacement du véhicule automobile selon l'une des revendications précédentes.
